Europäisches Patentamt

European Patent Office

Office européen des brevets

(11) Veröffentlichungsnummer: **0 365 752**
**A2**

## EUROPÄISCHE PATENTANMELDUNG

(21) Anmeldenummer: **89112076.8**

(22) Anmeldetag: **01.07.89**

(51) Int. Cl.⁵: **D01G 27/00 , B65G 37/00**

(30) Priorität: **25.10.88 DE 3836243**

(43) Veröffentlichungstag der Anmeldung:
**02.05.90 Patentblatt 90/18**

(84) Benannte Vertragsstaaten:
**CH DE FR IT LI**

(71) Anmelder: **Zinser Textilmaschinen GmbH**
**Hans-Zinser-Strasse Postfach 1480**
**D-7333 Ebersbach/Fils(DE)**

(72) Erfinder: **Block, Karl-Heinz, Dipl.-Ing.**
**Schwarenbergstrasse 145**
**D-7000 Stuttgart 1(DE)**

(74) Vertreter: **Wilhelm & Dauster Patentanwälte**
**European Patent Attorneys**
**Hospitalstrasse 8**
**D-7000 Stuttgart 1(DE)**

(54) **Transportvorrichtung, insbesondere für jeweils einen einer Kämmaschine vorzulegenden Wickel.**

(57) Bei einer Transportvorrichtung, insbesondere für einen einer Kämmaschine vorzulegenden Wickel, wird vorgesehen, daß zwischen einer verfahrbaren Einrichtung und einer Greifeinrichtung eine Hubeinrichtung mit einer Sicherheitseinrichtung angeordnet ist, die bei einer eine normale Absenkgeschwindigkeit überschreitenden Absenkgeschwindigkeit anspricht und die weitere Absenkbewegung bremst und/oder sperrt.

EP 0 365 752 A2

## Transportvorrichtung, insbesondere für jeweils einen einer Kämmaschine vorzulegenden Wickel

Die Erfindung betrifft eine Transportvorrichtung, insbesondere für jeweils einen einer Kämmaschine vorzulegenden Wickel, mit einer an einer verfahrbaren Einrichtung aufgehängten Greifeinrichtung, die mittels einer Hubeinrichtung auf- und abbewegbar ist.

Der Erfindung liegt die Aufgabe zugrunde, bei einer Transportvorrichtung der eingangs genannten Art sicherzustellen, daß bei einem Versagen der Hubeinrichtung keine Gefährdung von unterhalb der Greifeinrichtung befindlichen Personen oder auch Maschinen auftritt.

Diese Aufgabe wird dadurch gelöst, daß zwischen der verfahrbaren Einrichtung und der Greifeinrichtung eine Sicherheitseinrichtung angeordnet ist, die bei einer die normale Absenkgeschwindigkeit der Greifeinrichtung überschreitenden Absenkgeschwindigkeit anspricht und die weitere Absenkbewegung bremst und/oder sperrt.

Durch diese Ausbildung wird erreicht, daß die Absenkgeschwindigkeit auf die bei Normalbetrieb übliche Absenkgeschwindigkeit begrenzt ist, selbst wenn ein Bruch in der Hubeinrichtung auftritt. Da die normale Absenkgeschwindigkeit relativ niedrig ist, wird eine Gefährdung von Bedienungspersonen und/oder Maschinen ausgeschlossen.

In weiterer Ausgestaltung der Erfindung wird vorgesehen, daß die Hubeinrichtung ein Zugelement enthält, zu welchem ein ausziehbares Zugelement der Sicherheitseinrichtung parallel angeordnet ist.

Bei einer einfachen Ausführungsform der Erfindung wird vorgesehen, daß zwischen der verfahrbaren Einrichtung und der Greifeinrichtung ein Gurt o.dgl. angeordnet ist, der mit einem selbstsperrenden, rückspulenden Aufroller versehen ist. Derartige selbstsperrende und rückspulende Aufroller sind in Verbindung mit Automatik-Sicherheitsgurten von Kraftfahrzeugen bekannt, z.B. DE-A 36 36 073 oder EP-A 0 134 567. Bei diesen bekannten Aufrollern wird die Auszugsgeschwindigkeit zum Auslösen einer Sperrfunktion benutzt. Während einer darunterliegenden Auszugsgeschwindigkeit, die hier der Absenkgeschwindigkeit der Greifeinrichtung entspricht, ist die Bewegung nicht behindert. Es sind auch Gurtaufroller bekannt, die auf die Beschleunigung der Einrichtung ansprechen, an welcher sie befestigt sind. Derartige Gurtaufroller können in Verbindung mit der vorliegenden Erfindung ebenfalls benutzt werden, wobei dann allerdings der Gurtaufroller an der Greifeinrichtung befestigt werden muß, die sich bei einem Bruch der Hubeinrichtung einer erhöhten Beschleunigung ausgesetzt sieht.

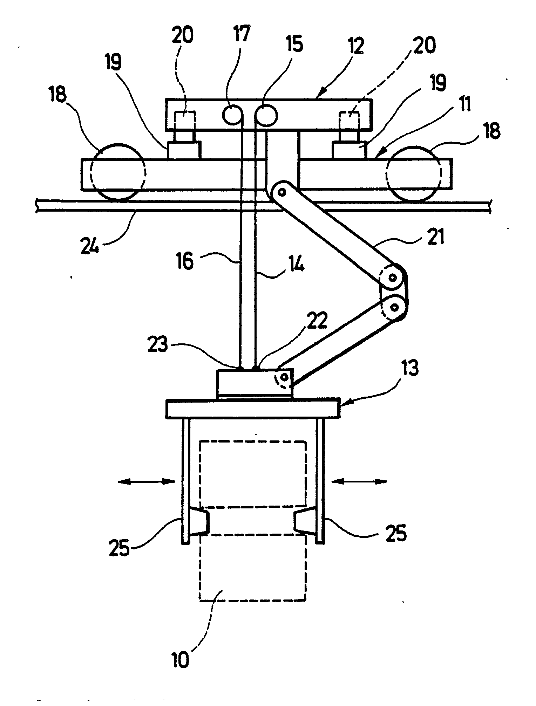

Weitere Merkmale und Vorteile der Erfindung ergeben sich aus der Beschreibung der in der Zeichnung dargestellten Ausführungsform.

Die Figur zeigt eine schematische Darstellung einer erfindungsgemäßen Transportvorrichtung.

Die dargestellte Transportvorrichtung besitzt eine auf einer Kranbahn (24) verfahrbare Kranbrükke (11), die an ihren Stirn enden mit Laufrollen (18) aufweisenden Fahrwerken versehen ist und die zwei Brückenträger (19) aufweist. Auf diesen Brükkenträgern (19) läuft eine Laufkatze (12), die mit Laufrädern (20) versehen ist, von denen wenigstens eines angetrieben ist. An der Laufkatze (12) ist eine Greifeinrichtung (13) aufgehängt, die mit in horizontaler Richtung verstellbaren Greifarmen (25) versehen ist, die zur Aufnahme eines Wickels (10) dienen.

Die Greifeinrichtung (13) ist mittels einer Hubeinrichtung an der Laufkatze (12) befestigt, so daß die Greifeinrichtung (13) jedem Punkt des Raumes zustellbar ist, den die Kranbahn (11) überdeckt. Die Hubeinrichtung enthält eine an einer anderen Stelle (22) der Greifeinrichtung (13) angelenkten Kette (14), die über ein angetriebenes Kettenrad (15) auf- und abbewegbar ist.

Zwischen der Laufkatze (12) und der Greifeinrichtung (13) ist ein parallel zu der Kette (14) verlaufender Gurt (16) angeordnet. Der Gurt (16) ist an einer Anlenkstelle (23) an der Greifeinrichtung (13) angelenkt und über einen Gurtaufroller (17) an der Laufkatze (12) befestigt. Der selbstsperrende und rückspulende Gurtaufroller (17) kann beispielsweise so ausgebildet werden, wie es durch die DE-A 36 36 073 oder die EP-A 0 134 567 bekannt ist, oder auch nach anderen bei Automatik-Sicherheitsgurten für Kraftfahrzeuge bekannten Konstruktionen. Bei der dargestellten Bauart wird vorgesehen, daß der Gurtroller (17) anspricht und die weitere Bewegung sperrt, wenn die Abzugsgeschwindigkeit, mit welcher der Gurt (16) aus dem Gurtroller (17) herausgezogen wird, einen vorgegebenen Wert überschreitet. Ein derartiger Gurtroller (17) könnte in Abwandlung der Ausführungsform auch an der Greifvorrichtung (13) angebracht werden, während der Gurt (16) dann an der Laufkatze (12) mittels einer Anlenkung fixiert werden kann.

Es ist auch möglich, eine weitere bekannte Bauart eines selbstsperrenden, aufspulenden Gurtrollers zu verwenden, der auf eine Beschleunigung des Bauteils anspricht, an welchem er befestigt ist. Derartige Gurtroller sind ebenfalls in Verbindung mit Automatik-Sicherheitsgurten für Kraftfahrzeuge bekannt. In diesem Fall müßte der Gurtroller dann an der Greifvorrichtung (13) befestigt werden.

## Ansprüche

1. Transportvorrichtung, insbesondere für jeweils einen einer Kämmaschine vorzulegenden Wickel, mit einer an einer verfahrbaren Einrichtung aufgehängten Greifeinrichtung, die mittels einer Hubeinrichtung auf- und abbewegbar ist, dadurch gekennzeichnet, daß zwischen der verfahrbaren Einrichtung (11,12) und der Greifeinrichtung (13) eine Sicherheitseinrichtung (16, 17) angeordnet ist, die bei einer die normale Absenkgeschwindigkeit der Greifeinrichtung (13) überschreitenden Absenkgeschwindigkeit anspricht und die weitere Absenkbewegung bremst und/oder sperrt.

2. Transportvorrichtung nach Anspruch 1, dadurch gekennzeichnet, daß die Hubeinrichtung (14, 15) ein Zugelement (14) enthält, zu welchem ein ausziehbares Zugelement (16) der Sicherheitseinrichtung (16, 17) parallel angeordnet ist.

3. Transportvorrichtung nach Anspruch 1 oder 2, dadurch gekennzeichnet, daß zwischen der verfahrbaren Einrichtung (11, 12) und der Greifeinrichtung (13) ein Gurt (16) o.dgl. angeordnet ist, der mit einem selbstsperrenden, rückspulenden Aufroller (17) versehen ist.